# EUROPÄISCHE PATENTSCHRIFT

(11) **EP 1 882 164 B1**
(45) Veröffentlichungstag und Bekanntmachung des Hinweises auf die Patenterteilung: **29.06.2016**
(21) Anmeldenummer: 06755026.9
(22) Anmeldetag: 04.05.2006
(51) Int. Cl.: G01F 1/84, G01F 15/14, G01M 3/28

(54) **IN-LINE-MEßGERÄT MIT EINEM MEßAUFNEHMER VOM VIBRATIONSTYP**
IN-LINE MEASURING DEVICE WITH A VIBRATION-TYPE MEASURING SENSOR
APPAREIL DE MESURE EN LIGNE COMPRENANT UN CAPTEUR DE MESURE DE TYPE A VIBRATIONS

(30) Priorität: 16.05.2005 DE 102005023215
(43) Veröffentlichungstag der Anmeldung: 30.01.2008
(73) Patentinhaber: Endress+Hauser Flowtec AG, 4153 Reinach (CH)
(72) Erfinder: ECKERT, Gerhard, 79618 Rheinfelden (DE)
(74) Vertreter: Andres, Angelika Maria
(86) Internationale Anmeldenummer: PCT/EP2006/062071
(87) Internationale Veröffentlichungsnummer: WO 2006/122880

(56) Entgegenhaltungen:
- EP-A- 1 464 923
- US-A- 5 594 180

## Beschreibung

Die Erfindung betrifft ein In-Line-Messgerät zum Messen eines in einer Rohrleitung strömenden, insb. gasförmigen und/oder flüssigen, Mediums.

In der Prozeßmess- und Automatisierungstechnik werden für die Messung physikalischer Parameter, wie z.B. dem Massedurchfluss, der Dichte und/oder der Viskosität, eines in einer Rohrleitung strömenden Mediums oftmals solche In-Line-Messgeräte verwendet, die mittels eines vom Medium durchströmten Messaufnehmers vom Vibrationstyp und einer daran angeschlossenen Mess- und Betriebsschaltung, im Medium Reaktionskräfte, wie z.B. mit dem Massedurchfluss korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluss, die jeweilige Viskosität und/oder ein die jeweilige Dichte des Mediums repräsentierendes Messsignal erzeugen.

Derartige, insb. als Coriolis-Massedurchflussmesser oder Coriolis-Massedurchfluss-/ Dichteaufnehmer ausgebildete, Messaufnehmer sind z.B. in der WO-A 04/099735, der WO-A 04/038341, WO-A 03/076879, der
WO-A 03/027616, der WO-A 03/021202 der WO-A 01/33174, der
WO-A 00/57141, der WO-A 98/07 009, der US-B 68 80 410,
US-B 68 51 323, der US-B 68 07 866, der US-B 67 11 958, der
US-B 66 66 098, der US-B 63 08 580, der US-A 60 92 429, der
US-A 57 96 011, der US-A 60 06 609, der US-A 56 02 345, der
US-A 53 01 557, der US-A 48 76 898, der US-A 47 93 191, der
EP-A 553 939, der EP-A 1 001 254, der EP-A 12 48 084, der EP-A 1 448 956 oder der EP-A 1421349 ausführlich und detailliert beschrieben. Zum Führen des zumindest zeitweise strömenden Mediums umfassen die Messaufnehmer jeweils mindestens ein an einem zumeist eher dickwandigen, insb. rohrförmigen und/oder balkenartigen, Tragzylinder oder in einem Tragrahmen entsprechend schwingfähig gehaltertes Aufnehmer-Rohr. Darüber hinaus weisen die vorgenanten Messaufnehmer ein mit dem ersten Aufnehmer-Rohr zumindest über zwei, insb. aber vier Koppelelemente - auch Knotenplatten oder Koppler genannt - mechanisch gekoppeltes, ebenfalls zumindest zeitweise vibrierendes zweites Aufnehmer-Rohr auf, wobei wenigstens das erste Aufnehmer-Rohr als ein dem Führen von zu messendem Medium dienendes, mit der Rohrleitung kommunizierendes erstes Messrohr ausgebildet ist. Zum Erzeugen oben genannter Reaktionskräfte, werden die beiden Aufnehmer-Rohre, angetrieben von einer zumeist elektro-dynamischen Erregeranordnung, im Betrieb vibrieren gelassen wird, wobei die beiden Aufnehmer-Rohre zumindest zeitweise Biegeschwingungen um eine zu einer Längsachse des Messaufnehmers im Wesentlichen parallele gedachte Schwingungsachse ausführen. Zum Erfassen, insb. einlassseitiger und auslassseitiger, Vibrationen des Aufnehmer-Rohrs und zum Erzeugen wenigstens eines diese repräsentierenden Schwingungsmesssignals weisen solche Messaufnehmer ferner jeweils eine auf Bewegungen und insoweit auch auf mechanische Schwingungen des Aufnehmer-Rohrs reagierende Sensoranordnung auf.

Im Betrieb wird das vorbeschriebene, durch das wenigstens eine als Messrohr ausgebildet Aufnehmer-Rohr, das zumindest darin momentan geführte Medium sowie zumindest anteilig durch die Erreger- und die Sensoranordnung gebildete innere Schwingungssystems des Messaufnehmers mittels der elektro-mechanischen Erregeranordnung zumindest zeitweise in einem Nutzschwingungsmode zu mechanischen Schwingungen auf wenigstens einer dominierenden Nutz-Schwingungsfrequenz angeregt. Diese Schwingungen im so genannten Nutzschwingungsmode sind zumeist, insb. bei Verwendung des Messaufnehmers als Coriolis-Massedurchfluss- und/oder Dichtemesser, zumindest anteilig als Lateral-Schwingungen ausgebildet. Als Nutz-Schwingungsfrequenz wird dabei üblicherweise eine natürliche momentane Resonanzfrequenz des inneren Schwingungssystems gewählt, die wiederum sowohl von Größe, Form und Material des Aufnehmer-Rohrs als auch von einer momentanen Dichte des Mediums abhängig ist; ggf. kann die Nutz-Schwingungsfrequenz auch von einer momentanen Viskosität des Mediums signifikant beeinflusst sein. Infolge schwankender Dichte des zu messenden Mediums und/oder infolge von im Betrieb vorgenommen Mediumswechseln ist die Nutz-Schwingungsfrequenz im Betrieb des Messaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Das von dem wenigstens einen Aufnehmer-Rohr sowie der Erreger- und der Sensoranordnung gemeinsam gebildete innere Schwingungssystem des Messaufnehmers ist ferner üblicherweise von einem den Tragrahmen bzw. den Tragzylinder als integralen Bestandteil aufweisenden Aufnehmer-Gehäuse eingehaust, wobei letzteres über ein einlassseitiges Ende und ein auslassseitiges Ende mit der Rohrleitung mechanisch gekoppelt ist. Für Messaufnehmer vom Vibrationstyp entsprechend geeignete Aufnehmer-Gehäuse sind beispielsweise in der WO-A 03/076879, der WO-A 03/021202, der WO-A 01/65213, der WO-A 00/57141, der US-B 67 76 052, der US-B 67 11 958, der US-A 60 44 715, der US-A 53 01 557 oder der EP-A 1 001 254 beschrieben. Insbesondere bei Messaufnehmern mit gebogenen Aufnehmer-Rohren weist das Aufnehmer-Gehäuse eine mit dem Trägerrahmen verbundene, insb. mit diesem verschweißen. Gehäusekappe auf, die die Aufnehmer-Rohre zumindest teilweise umgibt.

Das Messaufnehmer-Gehäuse dient neben der Halterung des wenigstens einen Messrohrs insb. auch dazu, dieses, die Erreger- und die Sensoranordnung sowie andere innen liegenden Bauteile vor äußeren Umwelteinflüssen, wie z.B. Staub oder Spritzwasser, zu schützen. Eine entsprechende Gehäusekappe für einen Messaufnehmer vom Vibrationstyp zum Einhausen von wenigstens einem gebogenen, im Betrieb des Messaufnehmers vibrierenden Rohrsegments eines fluidführenden Messrohrs ist z.B. in der WO-A 03/021202, der WO-A 03/021203, der WO-A 00/ 57 141, der US-A 53 01 557, der EP-A 1 001 254 beschrieben.

Seitens der Anwender wird an derartige Gehäuse für Messaufnehmer häufig auch die Anforderung gestellt, dass sie im Falle eines undichten oder berstenden Messrohrs dem dann zumeist deutlich über dem Außendruck liegenden statischen Innendruck zumindest für eine vorgegebene Dauer leckfrei standhalten, vgl. hierzu auch die WO-A 00/ 57 141, die US-A 60 44 715, die US-A 53 01 557 oder die EP-A 1 001 254. Zumindest für Anwendungen mit toxischen oder leicht entzündbaren Fluiden muss das Messaufnehmer-Gehäuse ggf. auch die an einen Sicherheitsbehälter zu stellenden Anforderungen erfüllen können. Ein damit einhergehendes Problem besteht, insb. für Anwendungen mit unter hohem statischen Druck von über 100 bar stehenden Medien, jedoch darin, dass es, nachdem das Messrohr undicht und somit das Messaufnehmer-Gehäuse ggf. mit einem erhöhten Innendruck beaufschlagt worden ist, zwar verzögert, so doch in der Wirkung gleich verheerend, unvermittelt zur Explosion des Messaufnehmer-Gehäuses und/oder eines am Messaufnehmer-Gehäuse entsprechend fixierten Elektronik-Gehäuses für die Messgerät-Elektronik kommen kann. Dieser Fall kann im Besonderen auch dann eintreten, wenn die Mediums führende Rohrleitung mit unvorhersehbaren hohen Drücken und/oder mit einer Folge von Druckschlägen von unvorhersehbar hoher Häufigkeit und/oder Folgefrequenz beaufschlagt werden. Darüber hinaus kann es aufgrund von Materialfehlern und/oder -ermüdungen auch nach längeren Betreibszeiten durchaus auch bei in der Spezifikation liegenden Druckwerten zum Versagen von Messrohr und Messaufhehmer-Gehäuses kommen.

Anderseits verbietet sich oftmals, besonders bei umweltgefährdenden Medien, beispielsweise hochtoxischen und/oder hochexplosiven Stoffen, der Einsatz von entsprechenden Sicherheitsauslässe, wie z.B. Berstscheiben und/oder Überdruckventile, zum Abbau allfälliger Überdrücke im Messaufnehmer, da eine Kontaminierung der Umwelt mit dem Medium zumeist sicher vermieden werden muss.

Ausgehend davon besteht daher eine Aufgabe der Erfindung darin, ein In-Line-Mes sgeräte der beschriebenen Art dahingehend zu verbessern, dass ein Versagen des Messrohrs möglichst frühzeitig erkannt und insoweit unvermittelte Explosionen des In-Line-Messgeräts, insb. des Messaufnehmer-Gehäuse und/oder des daran fixierten Elektronik-Gehäuses, verhindert werden können.

Zur Lösung der Aufgabe besteht die Erfindung in einem In-Line-Meßgerät zum Messen eines in einer Rohrleitung strömenden, insb. gasförmigen und/oder flüssigen, Mediums, welches In-Line-Meßgerät einen Meßaufnehmer vom Vibrationstyp sowie eine mit dem Meßaufnehmer elektrisch gekoppelte Meßgerät-Elektronik umfaßt Der Meßaufnehmer weist wenigstens ein mit der Rohrleitung kommunizierendes, im Betrieb vibrierendes Meßrohr, eine auf das wenigstens eine Meßrohr einwirkende elektro-mechanische, insb. elektrodynamische, Erregeranordnung zum Erzeugen und Aufrechterhalten von mechanischen Schwingungen des Meßrohrs, eine Sensoranordnung zum Erzeugen wenigstens eines Schwingungen des Meßrohrs repräsentierenden Schwingungsmeßsignals mit wenigstens einem am wenigstens einen Meßrohr oder in dessen Nähe angeordnete Schwingungssensor, sowie ein das wenigstens eine Meßrohr zusammen mit der Erreger- und der Sensoranordnung einhausendes Meßaufnehmer-Gehäuse auf. Darüber hinaus überwacht die Meßgerät-Elektronik einen statischen Innendruck innerhalb des Meßaufnehmer-Gehäuses, beispielsweise weiter auch eine Dichtheit des wenigstens einen Meßrohrs.

Des weiteren besteht die Erfindung in einem Verfahren zum Überwachen eines In-Line-Meßgeräts zum Messen eines in einer Rohrleitung strömenden, insb. gasförmigen und/oder flüssigen, Mediums, welches In-Line-Meßgerät eine Meßgerät-Elektronik sowie einen mit dieser elektrisch gekoppelten Meßaufnehmer vom Vibrationstyp umfaßt, der wenigstens ein mit der Rohrleitung kommunizierendes und im Betrieb vibrierendes Meßrohr, eine auf das wenigstens eine Meßrohr einwirkende elektro-mechanische, insb. elektrodynamische, Erregeranordnung zum Erzeugen und Aufrechterhalten von mechanischen Schwingungen des wenigstens einen Meßrohrs, eine Sensoranordnung zum Erzeugen wenigstens eines Schwingungen des wenigstens einen Meßrohrs repräsentierenden Schwingungsmeßsignals mit wenigstens einem am Meßrohr oder in dessen Nähe angeordnete Schwingungssensor, sowie ein das wenigstens eine Meßrohr zusammen mit Erreger- und Sensoranordnung einhausendes Meßaufnehmer-Gehäuse aufweist, welches Verfahren folgende Schritte umfaßt:
- Strömenlassen des zu messenden Mediums durch das wenigstens eine Meßrohr des Meßaufnehmers,
- Fließenlassen eines von der Meßgeräte-Elektronik gelieferten Erregerstroms durch die Erregeranordnung und Vibrierenlassen des wenigstens einen Meßrohrs zum Erzeugen von mit wenigstens einer vom Medium zu erfassenden Meßgröße korrespondierenden Reaktionskräften im Medium,
- Erfassen von Vibrationen des wenigstens einen Meßrohrs mittels der Sensoranordnung und Erzeuen wenigstens eines mechanische Schwingungen des Meßrohrs repräsentierenden Schwingungsmeßsignals, sowie

- Ermitteln eines statischen Innendrucks innerhalb des Messaufnehmer-Gehäuses und/oder einer Dichtheit des wenigstens einen Messrohrs wobei die Messgerät-Elektronik.

Nach einer ersten Ausgestaltung des In-Line-Messgeräts der Erfindung generiert die Messgerät-Elektronik unter Verwendung wenigstens eines während des Betriebs intern ermittelten und/oder intern gemessenen Betriebsparameters wiederholt wenigstens einen Überwachungswert, der in seiner Höhe vom momentanen statischen Innendruck innerhalb des Messaufnehmer-Gehäuses und/oder von einem das wenigstens eine Messrohr momentan umgebenden Medium abhängig ist.

Nach einer zweiten Ausgestaltung des In-Line-Messgeräts der Erfindung generiert die Messgerät-Elektronik den Überwachungswert unter Verwendung des wenigstens einen Schwingungsmesssignals.

Nach einer dritten Ausgestaltung des In-Line-Messgeräts der Erfindung erzeugt die Messgerät-Elektronik wenigstens ein Treibersignal für die Erregeranordnung und generiert die Messgerät-Elektronik den Überwachungswert unter Verwendung des wenigstens einen Treibersignals, insb. anhand des in der Erregeranordnung fließenden Erregerstroms.

Nach einer vierten Ausgestaltung des In-Line-Messgeräts der Erfindung ist die Erregeranordnung zumindest zeitweise von einem von der Messgerät-Elektronik getriebenen Erregerstrom durchflossen, und generiert die Messgerät-Elektronik den Überwachungswert anhand des Erregerstroms und/oder anhand einer zeitlichen Änderung des Erregerstroms. Nach einer Weiterbildung dieser Ausgestaltung der Erfindung ermittelt die Messgerät-Elektronik einen, insb. digitalen, Erregerstromwert, der eine Stromstärke des Erregerstroms momentan repräsentiert, und generiert die Messgerät-Elektronik den Überwachungswert unter Verwendung wenigstens eines intern ermittelten Erregerstromwerts, insb. anhand einer Folge von Erregerstromwerten. Nach einer anderen Weiterbildung dieser Ausgestaltung der Erfindung generiert die Messgerät-Elektronik den Überwachungswert anhand einer Folge von, insb. digital gespeicherten, Erregerstromwerten. Ferner ist vorgesehen, dass die Messgerät-Elektronik den Überwachungswert anhand einer zeitlichen Ableitung der Stromstärke des Erregerstrom und/oder einer anderen zeitliche Änderungen der Stromstärke des Erregerstrom charakterisierenden Messgröße generiert.

Nach einer fünften Ausgestaltung des In-Line-Messgeräts der Erfindung ist das In-Line-Messgerät weiters dafür vorgesehen und in der Lage, die Dichte des Mediums zu messen. Nach einer Weiterbildung dieser Ausgestaltung der Erfindung ermittelt die Messgerät-Elektronik unter Verwendung des wenigstens einen Schwingungsmesssignals wiederholt einen, insb. digitalen, Dichte-Messwert, der eine Dichte des Mediums momentan repräsentiert, und generiert die Messgerät-Elektronik den Überwachungswert unter Verwendung wenigstens eines intern ermittelten Dichte-Messwerts, insb. anhand einer Folge von Dichte-Messwerten. Nach einer Weiterbildung dieser Ausgestaltung der Erfindung generiert die Messgerät-Elektronik den Überwachungswert anhand einer Folge von, insb. digital gespeicherten, Dichte-Messwerten. Nach einer anderen Weiterbildung dieser Ausgestaltung der Erfindung generiert die Messgerät-Elektronik den Überwachungswert anhand einer zeitlichen Ableitung der gemessenen Dichte und/oder einer anderen zeitliche Änderungen der gemessenen Dichte charakterisierenden Messgröße. Ferner ist vorgesehen, dass die Messgerät-Elektronik den Dichte-Messwert anhand der wenigstens einen der Überwachung dienenden Schwingungsfrequenz ermittelt.

Nach einer sechsten Ausgestaltung des In-Line-Messgeräts der Erfindung ist die Erregeranordnung zumindest zeitweise von einem von der Messgerät-Elektronik getriebenen Erregerstrom durchflossen, ermittelt die Messgerät-Elektronik unter Verwendung des wenigstens einen Schwingungsmesssignals wiederholt einen, insb. digitalen, Dichte-Messwert, der eine Dichte des Mediums momentan repräsentiert, und generiert die Messgerät-Elektronik den Überwachungswert anhand eines Quotienten, der mittels eines intern ermittelten, den Erregerstrom momentan repräsentierenden Erregerstromwerts und eines intern ermittelten Dichte-Messwerts gebildet ist.

Nach einer siebenten Ausgestaltung des In-Line-Messgeräts der Erfindung generiert die Messgerät-Elektronik den Überwachungswert anhand wenigstens einer der Überwachung dienenden Schwingungsfrequenz, mit der das wenigstens eine Messrohr zumindest zeitweise schwingt, und/oder anhand einer zeitlichen Änderung dieser wenigstens einen Schwingungsfrequenz. Nach einer Weiterbildung dieser Ausgestaltung der Erfindung generierte die Messgerät-Elektronik den Überwachungswert anhand einer zeitlichen Ableitung und/oder einer anderen zeitliche Änderungen der wenigstens einen der Überwachung dienenden Schwingungsfrequenz charakterisierenden Messgröße.

Nach einer achten Ausgestaltung des In-Line-Messgeräts der Erfindung vergleicht die Messgerät-Elektronik den Überwachungswert mit einem vorgegebenen und/oder im Betrieb vorgebbaren Grenzwert, der eine für das Messrohr im Betrieb maximal zulässige Höhe des Überwachungswerts repräsentiert, und löst die Messgerät-Elektronik bei detektiertem Erreichen und/oder Überqueren des Grenzwerts einen Alarm aus.

Nach einer neunten Ausgestaltung des In-Line-Messgeräts der Erfindung vergleicht die Messgerät-Elektronik die zeitliche Änderung des Überwachungswerts mit einem vorgegebenen und/oder im Betrieb vorgebbaren Änderungsgrenzwert, der eine im Betrieb, insb. über ein vorgegebenes Zeitintervall gemittelte, maximal zulässige Änderungsgeschwindigkeit des Überwachungswerts repräsentiert, und löst die Messgerät-Elektronik bei detektiertem Erreichen und/oder Überqueren des Änderungsgrenzwerts einen Alarm aus.

Nach einer zehnten Ausgestaltung des In-Line-Messgeräts der Erfindung generiert die Messgerät-Elektronik mittels des Überwachungswerts intern wenigstens ein Alarmsignal, das einen überhöhten statischen Innendruck innerhalb des Messaufnehmer-Gehäuses und/oder das Vorhandensein eines Lecks im wenigstens einen Messrohr signalisiert.

Nach einer elften Ausgestaltung des In-Line-Messgeräts der Erfindung kommuniziert die Messgerät-Elektronik mittels eines Datenübertragungssystems, insb. einem leitungsgebundenen Feldbussystem, mit einer übergeordneten, Messwerte verarbeitenden Steuerungseinheit, und sendet die Messgerät-Elektronik das Alarmsignal an die Steuerungseinheit.

Nach einer ersten Ausgestaltung des Verfahrens der Erfindung, umfaßt dieses weiters einen Schritt des Generieren wenigstens eines Überwachungswerts, der in seiner Höhe vom momentanen statischen Innendruck innerhalb des Messaufnehmer-Gehäuses und/oder von einem das wenigstens eine Messrohr momentan umgebenden Medium abhängig ist, mittels der Messgerät-Elektronik.

Nach einer zweiten Ausgestaltung des Verfahrens der Erfindung, umfaßt dieses weiters einen Schritt des Vergleichens des wenigstens einen Überwachungswerts mit einem Grenzwert, der eine für das Messrohr im Betrieb maximal zulässige Höhe des Überwachungswerts repräsentiert, und/oder mit einem Änderungsgrenzwert, der eine im Betrieb, insb. über ein vorgegebenes Zeitintervall gemittelte, maximal zulässige. Änderungsgeschwindigkeit des Überwachungswerts repräsentiert.

Nach einer dritten Ausgestaltung des Verfahrens der Erfindung, umfaßt dieses weiters Schritte des Detektiertens eines Erreichen und/oder Überquerens des Grenzwerts und/oder des Änderungsgrenzwert sowie Auslösen eines Alarms.

Nach einer vierten Ausgestaltung des Verfahrens der Erfindung, ermittelt die Messgerät-Elektronik den wenigstens einen Überwachungswert anhand wenigstens eines während des Betriebs intern ermittelten und/oder intern gemessenen Betriebsparameters, insb. eines Erregerstromwerts, der eine Stromstärke des Erregerstroms momentan repräsentiert, einer der Überwachung dienenden Schwingungsfrequenz oder davon abgeleiteter Betriebsparameter.

Ein Grundgedanke der Erfindung besteht darin, allfällige Lecks im Messrohr und die damit einhergehende potentielle Gefährdung der Umgebung des In-Line-Messgeräts dadurch zu erkennen, das die durch den erhöhten statischen Innendruck im Messaufnehmer-Gehäuse bedingte Veränderungen im Schwingverhalten des wenigstens einen Messrohrs anhand des Schwingungen bewirkenden Treibersignals und/oder anhand des Schwingungen des Messrohrs repräsentierenden Schwingungsmesssignals direkt erkannt werden. Ein Vorteil der Erfindung besteht darin, dass somit zur Überwachung des Innendrucks des Messaufnehmer-Gehäuse und/ der des Messrohrs zusätzliche Drucksensoren nicht zwingend erforderlich sind.

Die Erfindung wird nun anhand der Figuren der Zeichnung näher erläutert, in der ein bevorzugtes Ausführungsbeispiel dargestellt ist. Funktionsgleiche Teile sind in den einzelnen Figuren mit denselben Bezugszeichen versehen, die jedoch in nachfolgenden Figuren nur dann wiederholt sind, wenn es sinnvoll erscheint.

Fig. 1a, b zeigen ein, beispielsweise als Coriolis-Massedurchfluss-/ Dichte- und/ oder Viskositäts-Messer dienendes, In-Line-Messgerät mit einem Messaufnehmer vom Vibrationstyp in verschieden Seitenansichten,

Fign. 2 bis 5 zeigen Einzelheiten eines für ein In-Line-Messgerät gemäß den Fign. 1a, b geeigneten Messaufnehmers vom Vibrationstyp in verschiedenen, teilweise geschnitten Seitenansichten,

Fig. 6 zeigt Verläufe für Abweichungen Messaufnehmer vom Vibrationstyp treibender Erregerströme von einem für den zugehörigen Messaufnehmer vorab jeweils ermittelten nominalen Erregerstrom, die für In-Line-Messgeräte gemäß den Fign. 1a, b bei unterschiedlichen Nennweiten und verschiedenen Innendrücke im Messaufnehmer-Gehäuse experimentell ermittelt wurden,

Fig. 7 zeigt Verläufe für Abweichungen von mittels In-Line-Messgeräten gemäß den Fign. 1a, b gemessenen Dichten von einer vorgegebenen Referenzdichte sind in Abhängigkeit vom innerhalb des Messaufnehmer-Gehäuses gemessenen Innendruck, die für In-Line-Messgeräte gemäß den Fign. 1a, bei unterschiedlichen Nennweiten und verschiedenen Innendrücke im Messaufnehmer-Gehäuse experimentell ermittelt wurden, und

Fig. 8 zeigt Verläufe für auf die gemessenen Dichte-Messwerte gemäß Fig. 7 normierte zugehörige Erregerströme gemäß Fig. 6.

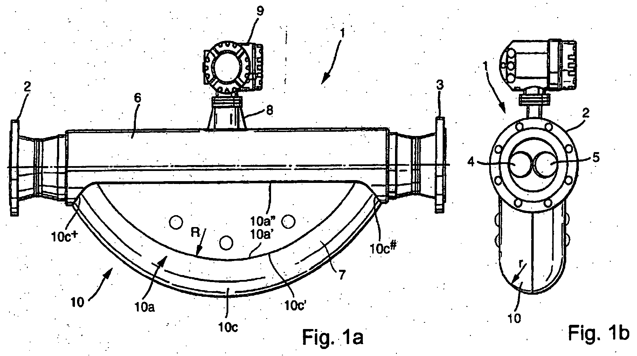

In den Fig. 1a, b ist ein, insb. als Coriolis-Massedurchfluss- und/oder Dichte-Messgerät ausgebildetes, In-Line-Messgerät 1 dargestellt, das beispielsweise dazu dient, einen Massendurchfluss m eines in einer - hier aus Übersichtlichkeitsgründen nicht dargestellten - Rohrleitung strömenden Mediums zu erfassen und in einen diesen Massendurchfluss momentan repräsentierenden Massendutchfluss-Messwert Xₘ abzubilden. Medium kann hierbei praktisch jeder strömungsfähige Stoff sein, insb. eine Flüssigkeit, ein Gas, ein Dampf oder dergleichen. Alternativ oder in Ergänzung kann das In-Line-Messgerät 1 ggf. auch dazu verwendet werden, eine Dichte, _{ρ}, und/ oder eine Viskosität _{η} des Mediums zu messen.

Zum Messen des Mediums umfaßt das In-Line-Messgerät 1 einen im Betrieb vom Medium entsprechend durchströmten Messaufnehmer 10 vom Vibrationstyp sowie eine mit dem Messaufnehmer 10 elektrisch verbundene - hier nicht im einzelnen, sondern lediglich als schematisch als Schaltungsblock dargestellte - Messgerät-Elektronik 20. In vorteilhafter Weise ist die Messgerät-Elektronik 20 so ausgelegt, dass sie im Betrieb des In-Line-Messgeräts 1 mit einer diesem übergeordneten Messwertverarbeitungseinheit, beispielsweise einer speicherprogrammierbaren Steuerung (SPS), einem Personalcomputer und/oder einer Workstation, via Datenübertragungssystem, beispielsweise einem seriellen Feldbus, Mess- und/oder andere Betriebsdaten austauschen kann. Des weiteren ist die Messgerät-Elektronik so ausgelegt, dass sie von einer externen Energieversorgung, beispielsweise auch über das vorgenannte Feldbussystem, gespeist werden kann. Für den Fall, dass das In-line-Messgerät für eine Ankopplung an ein Feldbus- oder ein anderes Kommunikationssystem vorgesehen ist, weist die, insb. programmierbare, Messgerät-Elektronik 20 zudem eine entsprechende Kommunikations-Schnittstelle für eine Datenkommunikation auf, z.B. zum Senden der Mess- und/oder Betriebsdaten an die bereits erwähnte speicherprogrammierbare

Steuerung oder ein übergeordnetes Prozeßleitsystem.

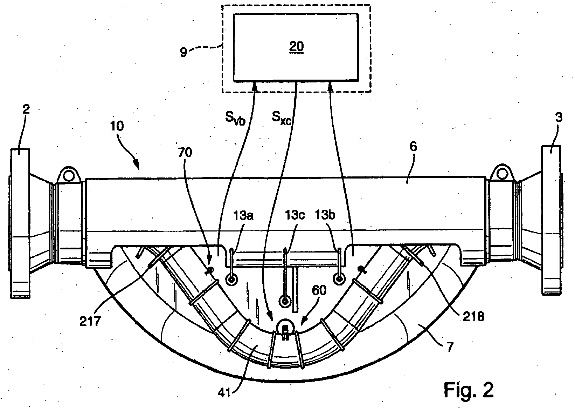

In den Fig. 2 bis 5 ist in unterschiedlichen Darstellungsarten ein Ausführungsbeispiel für den, insb. als Coriolis-Massedurchfluss-, als Dichte- und/oder als Viskositäts-Aufnehmer dienenden, Messaufnehmer 1 vom Vibrationstyp gezeigt. Wie bereits erwähnt, dient der Messaufnehmer 1 dazu, in einem hindurchströmenden Medium solche mechanischen Reaktionskräfte, insb. vom Massendurchfluss abhängige Corioliskräfte, von der Mediumsdichte abhängige Trägheitskräfte und/oder von der Mediumsviskosität abhängige Reibungskräfte, zu erzeugen, die sensorisch erfaßbar und insoweit messbar auf den Messaufnehmer zurückwirken. Abgeleitet von diesen das Medium beschreibenden Reaktionskräften können mittels in der Messgerät-Elektronik entsprechend implementierten Auswerte-Verfahren in der dem Fachmann bekannten Weise z.B. der Massendurchfluss, die Dichte und/oder die Viskosität des Mediums gemessen werden. Der Messaufnehmer 1 ist im Betrieb in den Verlauf einer von einem zu messenden, insb. flüssigen, gasförmigen oder dampfförmigen, Medium durchströmten - aus Gründen der Übersichtlichkeit jedoch nicht dargestellten - Rohrleitung über Flansche 2, 3, einzusetzen. Anstatt mittels Flanschen kann der Messaufnehmer 1 an die erwähnte Rohrleitung auch durch andere bekannte Anschlußmittel angeschlossen werden, wie z.B. mittels Triclamp-Anschlüssen oder Schraubverbindungen.

Zum Führen von zu messendem Medium umfaßt der Messaufnehmer wenigstens ein in einem Aufnehmer-Gehäuse 10 schwingfähig gehaltertes, als Messrohr dienendes erstes Aufnehmer-Rohr 4, das im Betrieb mit der Rohrleitung kommuniziert und, angetrieben von einer elektro-mechanischen Erregeranordnung 60, zumindest zeitweise in wenigstens einem für die Ermittlung der physikalischen Messgröße geeigneten Schwingungsmode vibrieren gelassen wird. Als Materialien für das Aufnehmer-Rohr eignen sich im besonderen Stahl, insb. Edelstahl, Titan, Zirkonium oder Tantal. Darüber hinaus kann als Material für das Aufnehmer-Rohr aber auch praktisch jeder andere dafür üblicherweise verwendete oder zumindest geeignete Werkstoff dienen.

Neben dem Aufnehmer-Gehäuse 10 und dem darin gehalterten wenigstens einen Aufnehmer-Rohr 4 umfaßt der Messaufnehmer 1 ferner eine auf das wenigstens eine Aufnehmer-Rohr 4 einwirkende elektro-mechanische, insb. elektro-dynamische, Erregeranordnung 60 zum Erzeugen und/oder Aufrechterhalten von mechanischen Schwingungen, im besonderen auch dann, wenn das Aufnehmer-Rohr 4 vom zu messenden Mediums durchströmt ist. Des weiteren ist im Messaufnehmer eine auf mechanische Schwingungen, beispielsweise Biege-Schwingungen, des Aufnehmer-Rohrs 4 reagierende Sensoranordnung 70 zum Erzeugen wenigstens eines Schwingungen des Aufnehmer-Rohrs 4 repräsentierenden Schwingungsmesssignals s_{vb} vorgesehen. Zumindest das wenigstens eine Aufnehmer-Rohre 4, 5 sowie daran zusätzlich fixierte Komponenten, wie z.B. Teil der Erregeranordnung 60 und der Sensoranordnung 70 bilden somit ein inneres Schwingungssystem des Messaufnehmers.

Im Betrieb des Messaufnehmers 1 führt praktisch das gesamte innere Schwingungssystems des Messaufnehmers 1, das durch das wenigstens eine als Messrohr dienende Aufnehmer-Rohr 4, das momentan darin geführte Medium sowie zumindest anteilig durch die Erreger- und die Sensoranordnung 60, 70 gebildet ist, zumindest zeitweise mechanische Schwingungen mit wenigstens einer Nutz-Schwingungsfrequenz Fₙ aus, wobei die mechanischen Schwingungen zumindest zeitweise und/oder zumindest anteilig als Lateral-Schwingungen, insb. als Biege-Schwingungen, ausgebildet sind. Die momentane Nutz-Schwingungsfrequenz Fₙ des inneren Schwingungssystems ist dabei in vorteilhafter Weise so geregelt und so eingestellt, dass sie im Wesentlichen einer momentanen natürlichen Eigenfrequenz des inneren Schwingungssystems entspricht. Infolgedessen ist die Nutz-Schwingungsfrequenz Fₙ in dem Fachmann bekannter Weise sowohl von Größe, Form und Material des wenigstens einen Aufnehmer-Rohrs als auch im besonderen von einer momentanen Dichte des Mediums abhängig. Bei schwankender Dichte, beispielsweise aufgrund von sich ändernden Medieneigenschaften oder aufgrund von Mediumswechseln im Rohrleitungssystem, ist die Nutz-Schwingungsfrequenz Fₙ im Betrieb des Messaufnehmers somit innerhalb eines vorgegebenen, eine untere und eine obere Grenzfrequenz aufweisenden Nutz-Frequenzbandes _{Δ}Fₙ veränderlich, wobei die untere Grenzfrequenz mit einer höchstens zu erwartenden Dichte des Mediums korrespondiert, während die obere Grenzfrequenz beispielsweise bei entlüftetem Messrohr auftritt.

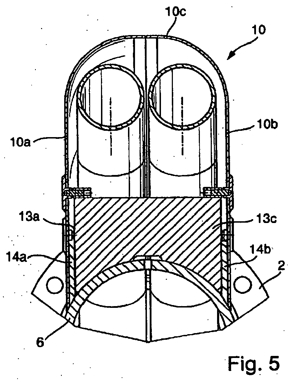

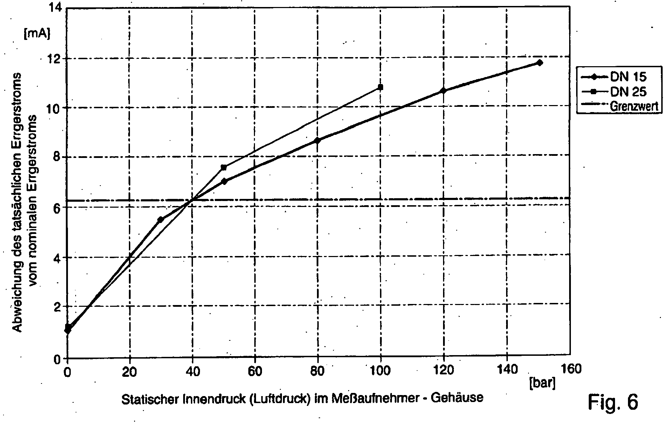

Neben dem, insb. einstückig ausgebildeten, Aufnehmer-Rohr 4 ist im hier gezeigten Ausführungsbeispiel ferner ein zum ersten Aufnehmer-Rohr 4 im Wesentlichen identisches, insb. ebenfalls mit der Rohrleitung kommunizierendes und insoweit als zweites Messrohr des Messaufnehmers dienendes, zweites Aufnehmer-Rohr 5 im Messaufnehmer vorgesehen, das im Betrieb ebenfalls mechanische Schwingungen ausfährt Die beiden, insb. zumindest abschnittsweise zueinander parallel verlaufenden, Aufnehmer-Rohre 4, 5 können, wie in den Fig. 5 und 6 angedeutet und beispielsweise auch in der US-B 67 11 958, der US-A 57 96 011, der US-A 53 01 557 gezeigt, mittels entsprechender Verteilerstücke 11, 12 jeweils einlaßseitig und auslaßseitig miteinander zu im Betrieb parallel durchströmten Strömungspfaden verbunden sein; sie können aber auch, wie z.B. in der US-A 60 44 715 gezeigt, unter Bildung hintereinander liegender Strömungspfad seriell miteinander verbunden sein. Es ist aber auch möglich, wie beispielsweise auch in der US-B 66 66 098 oder der US-A 55 49 009 vorgeschlagen, lediglich eines der beiden Aufnehmer-Rohre als dem Führen von Medium dienendes Messrohr und das andere als vom zu messenden Medium nicht durchströmtes, der Verringerung von intrinsischen Imbalancen im Messaufnehmer dienendes Blindrohr zu verwenden.

Zum Feinabstimmen des mittels der beiden Aufnehmer-Rohre 4, 5 gebildeten inneren Schwingungssystems auf geeignete mechanische Eigenfrequenzen sowie zur Minimierung von durch die vibrierenden Aufnehmer-Rohren einlaßseitig oder auslaßseitig im Aufnehmer-Gehäuse verursachten mechanische Spannungen und/oder Vibrationen können die beiden Aufnehmer-Rohre 4, 5 ferner einlaßseitig mittels wenigstens eines ersten Koppelelements 217a, 217b, 217c sowie auslaßseitig mittels wenigstens eines zweiten Koppelelement 218a, 218b, 218c miteinander mechanisch verbunden sein.

Im hier gezeigten Ausführungsbeispiel weist jedes der beiden Aufnehmer-Rohre 4, 5 wenigstens ein in zumindest einer Ebene zumindest abschnittsweise gebogenes zentrales Mittel-Rohrsegment 41,51 auf. Die Aufnehmer-Rohre 4, 5 können dabei beispielsweise, wie auch in der US-B 67 76 052 gezeigt, eine ausgeprägte U-Form aufweisen oder, wie auch in der US-B 68 02 224 oder der US-B 67 11 958 vorgeschlagen, im Wesentlichen V-förmig oder auch trapezförmig ausgebildet sein. Des weiteren können die Aufnehmer-Rohre aber auch, wie z.B. in der
US-A 57 96 011 beschrieben, nur sehr geringfügig oder, wie z.B. in der
WO-A 01/65213, der US-B 63 08 580, der US-A 60 92 429, der
US-A 60 44 715 gezeigt, eher rechteck- oder trapezartig ausgebogen. Als Alternative zu dem als Messrohr dienenden gebogenen Aufnehmer-Rohr kann, wie beispielsweise in der US-A 47 93 191, der US-A 56 02 345, der US-A 60 06 609, der US-B 68 80 410, der US-B 68 51 323 oder der
US-B 68 40 109, beschrieben, ferner auch ein gerades Rohr dienen.

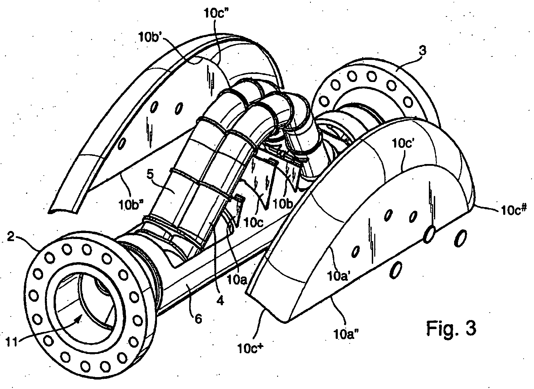

Bei dem in den Fign. 2 und 3 dargestellten Messaufnehmer ist jedes der beiden zentralen Mittel-Rohrsegmente jeweils im Wesentlichen V-förmig gebogen. Dabei umfaßt jedes der beiden Aufnehmer-Rohre 4, 5 ferner jeweils einlaßseitig ein gerades, zur der gedachten Schwingungsachse im Wesentlichen parallel verlaufendes Einlaß-Rohrsegment, das jeweils über ein einlaßseitiges bogenförmiges Zwischen-Rohrsegment in das jeweilige Mittel-Rohrsegment mündet. Darüber hinaus weist jedes der beiden Aufnehmer-Rohre 4, 5 jeweils auslaßseitig ein gerades, zur der gedachten Schwingungsachse im Wesentlichen parallel verlaufendes Auslaß-Rohrsegment auf, das jeweils über ein bogenförmiges auslaßseitiges Zwischen-Rohrsegment in das jeweilige Mittel-Rohrsegment mündet. Ferner weist jedes der Mittel-Rohrsegmente einen Scheitelbogen mit einem Öffnungswinkel auf, der kleiner als 150°, insb. kleiner als 120°, ist. Zumindest die Mittel-Rohrsegmente 41,51 der beiden Aufnehmer-Rohre 4, 5 werden im Betrieb von der daran zumindest anteilig fixierten elektro-mechanischen Erregeranordnung 60 zu auslegerartigen Vibrationen angeregt, bei denen sie aus der oben erwähnten Ebene lateral ausgelenkt und zueinander im Wesentlichen gegenphasig schwingen gelassen werden. Dabei führen das erste Aufnehmer-Rohr und das zweite Aufnehmer-Rohr im Betrieb zumindest zeitweise Biegeschwingungen um eine zu einer Längsachse L des Messaufnehmers im Wesentlichen parallele gedachte Schwingungsachse aus. Anders gesagt, werden zumindest die Mittel-Rohrsegmente 41, 51 in einem Biegeschwingungsmode nach der Art einseitig eingespannter Ausleger oder Zinken einer Stimmgabel schwingen gelassen. Die Erregeranordnung 60 weist im gezeigten Ausführungsbeispiel zumindest einen jeweils im Bereich der Scheitelbögen, insb. etwa jeweils mittig, an den beiden Aufnehmer-Rohren 4, 5 angeordneten Schwingungserreger auf. Bei dem Schwingungserreger kann es sich beispielsweise um einen solchen vom elektro-dynamischen Typ, also einen mittels einer am Aufnehmer-Rohr 5 fixierten Magnetspule 62 und einen darin eintauchenden, am anderen Aufnehmer-Rohr 4 entsprechend fixierten Anker 61 realisierten Schwingungserreger, handeln.

Zum Erfassen von Vibrationen wenigstens des einen Aufnehmer-Rohrs 4 und zum Erzeugen des wenigstens einen Schwingungen des Aufnehmer-Rohrs 4 repräsentierenden Schwingungsmesssignals s_{vb} ist, wie bereits erwähnt, eine Sensoranordnung vorgesehen, mittels der in der für derartige Messaufnehmer üblichen Weise, insb. einlaß- und auslaßseitige, Vibrationen des Rohrsegments 41 signalisiert und einer elektronischen Weiterverarbeitung zugeführt werden können. Im gezeigten Ausführungsbeispiel weist die Sensoranordnung dafür einen einlaßseitig an den Aufnehmer-Rohren 4, 5 angeordneten ersten Schwingungssensor sowie einen auslaßseitig an den Aufnehmer-Rohren 4, 5 angeordneten, insb. zum ersten Schwingungssensor im Wesentlichen identischen oder baugleichen, zweiten Schwingungssensor auf. Bei den Schwingungssensoren kann es sich ebenfalls um solche vom elektro-dynamischen Typ, also jeweils mittels einer am Aufnehmer-Rohr 5 fixierten Magnetspule 72, 82 und einen darin eintauchenden, am anderen Aufnehmer-Rohr 4 entsprechend fixierten Anker 71, 81 realisierten Schwingungssensor, handeln. Darüber hinaus können als Schwingungssensoren auch andere dem Fachmann bekannte, beispielsweise optoelektronische, Schwingungssensoren verwendet werden.

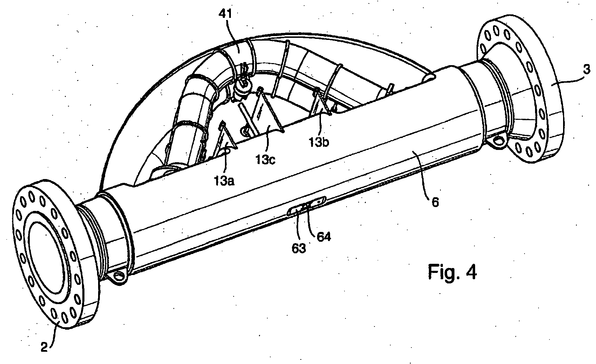

Zum Ermitteln der wenigstens einen physikalische Messgröße anhand des wenigstens einen Schwingungsmesssignals s_{vb} sind die Erregeranordnung 60 und die Sensoranordnung 70 ferner, wie bei derartigen Messaufnehmern üblich, in geeigneter Weise mit einer in der Messgerät-Elektronik 20 entsprechend vorgesehenen der Messund Betriebsschaltung elektrisch verbunden, beispielsweise galvanisch und/oder induktiv und/oder opto-elektronisch gekoppelt. Die Mess- und Betriebsschaltung wiederum erzeugt einerseits ein die Erregeranordnung 60 entsprechend treibendes, beispielsweise hinsichtlich eines Erregerstromes und/oder einer Erregerspannung geregeltes, Treibersignal s_{xc}. Infolgedessen wird ein von der Messgeräte-Elektronik 20 entsprechend gelieferter Erregerstrom durch Erregeranordnung flieBengelassen, der mittels des wenigstens einen Schwingungserregers in das wenigstens eine Messrohrs vibrierenlassende Erregerkräfte umgewandelt wird. Andererseits empfängt die Messund Betriebsschaltung das wenigstens eine Schwingungsmesssignal s_{vb} der Sensoranordnung 70 und generiert daraus gewünschte Messwerte, die beispielsweise einen Massedurchfluss, eine Dichte und/oder eine Viskosität des zu messenden Mediums repräsentieren können und die ggf. vor Ort angezeigt oder auch ggf. übergeordnet weiterverarbeitet werden. Die Messgerät-Elektronik 20 einschließlich der Mess- und Betriebsschaltung kann beispielsweise in einem separaten Elektronik-Gehäuse 9 untergebracht sein, das vom Messaufnehmer entfernt angeordnet oder, unter Bildung eines einzigen, kompakten In-Line-Messgeräts, direkt am Messaufnehmer 1, beispielsweise von außen am Messaufnehmer-Gehäuses 10, fixiert sein. Bei dem hier gezeigten Ausführungsbeispiel ist dafür am Aufnehmer-Gehäuse ferner ein dem Haltern des Elektronik-Gehäuses 9 dienendes halsartiges Übergangsstücks 8 angebracht. In den Fig. 4 bis 6 sind das Übergangsstück 8 und das Elektronik-Gehäuse 9 allerdings weggelassen; lediglich in Fig. 6 ist eine in eine Wand des Aufnehmer-Gehäuses 10 eingelassene Ansatzfläche 63 für das Übergangsstück 8 zu sehen. In der Ansatzfläche 63 ist eine elektrische Durchführung 64 angeordnet, mittels der elektrische Verbindungen zur Erregeranordnung 60 und zur Sensoranordnung 70 sowie gegebenenfalls weiteren elektrischen Komponenten, wie z.B. im Messaufnehmer 1 ggf. vorgesehenen Druck- und/oder Temperatursensoren, herstellbar sind.

Die Aufnehmer-Rohre 4, 5 des Messaufnehmers wie auch die daran jeweils angebrachte Erreger- und Sensoranordnung sind, wie aus der Zusammenschau der Fign. 1a, b und 3 ohne weiteres ersichtlich, vom bereits erwähnten Aufnehmer-Gehäuse 10 praktisch vollständig umhüllt. Das Aufnehmer-Gehäuse 10 dient insoweit also nicht nur als Halterung des wenigstens einen Aufnehmer-Rohrs 4 sondern darüber hinaus auch dazu, die innen liegenden Bauteile des Messaufnehmers 1, wie z.B. die Erregerund die Sensoranordnung und allfällig darüber hinaus innerhalb des Aufnehmer-Gehäuse plazierte Komponenten des Meßaufnehmers vor äußeren Umwelteinflüssen, wie z.B. Staub oder Spritzwasser, zu schützen. Überdies kann das Aufnehmer-Gehäuse 10 ferner auch so ausgeführt und so bemessen sein, dass es bei allfälligen Schäden am

Aufnehmer-Rohr 4, z.B. durch Rißbildung oder Bersten, ausströmendes Medium bis zu einem geforderten maximalen Überdruck im Inneren des Aufnehmer-Gehäuses möglichst vollständig zurückzuhalten kann. Als Material für das Aufnehmer-Gehäuse, insb. auch die Gehäusekappe 7, können z.B. Stähle wie Baustahl oder rostfreier Stahl, oder auch andere geeignete hochfeste Werkstoffe verwendet werden. Nach einer weiteren Ausgestaltung des Messaufnehmers bestehen das, insb. zumindest abschnittsweise gebogene, Aufnehmer-Rohr 4 und das Aufnehmer-Gehäuse aus jeweils dem gleichen Material, insb. Stahl oder Edelstahl, oder zumindest aus einander ähnlichen Materialien, insb. verschiedenen Stahlsorten. Ferner ist vorgesehen, die Flansche, wie auch in Fig. 3a, b dargestellt und wie bei derartigen Messaufnehmer durchaus üblich, als integralen Bestandteil des Aufnehmer-Gehäuses auszubilden, um so eine möglichst kurze Einbaulänge bei möglichst hoher Stabilität des Messaufnehmers zu erreichen; gleichermaßen können auch die ggf. vorgesehenen Verteilerstücke 11, 12 direkt in das Aufnehmer-Gehäuse integriert sein.

Bei dem hier gezeigten Ausführungsbeispiel umfaßt das Aufnehmer-Gehäuse 10 ein - hier als seitlich zumindest teilweise offenen Tragzylinder dargestelltes - Tragelement 6, das, wie in den Fign. 4 bis 6 dargestellt, mit dem wenigstens einen Aufnehmer-Rohr einlaßseitig und auslaßseitig mechanisch so verbunden ist, dass das wenigstens eine gebogene Rohrsegment 41 seitlich herausragt. Ferner weist das Aufnehmer-Gehäuse eine von den gebogenen Mittel-Rohrsegmenten der Aufnehmer-Rohre 4,5 beabstandet angeordnete und am Tragelement 6, insb. dauerhaft und/oder mediumsdicht, fixierte Gehäusekappe 7. Bei dem hier dargestellten Ausführungsbeispiel ist zumindest das Aufnehmer-Rohr 4 im hier rohrförmigen Tragelement 6 einlaß- und auslaßseitig so gehaltert, dass das schwingfähige Mittel-Rohrsegment 41, durch zwei Ausnehmungen 61, 62 des Tragelements 6 verlaufend, seitwärts aus diesem heraus- und somit in die ebenfalls am Tragelement 6 fixierte Gehäusekappe 7 hineinragt. Es sei hierbei noch erwähnt, das anstelle des hier eher rohrförmig dargestellten Tragelements 6 auch ein ggf. massiver Tragzylinder mit einem anderen geeigneten Querschnitt verwendet werden kann, beispielsweise auch ein ether balkenförmig ausgebildetes Tragelement.

Die dem Einhausen des Rohrsegments 41 dienende Gehäusekappe 7 umfaßt, wie in Fig. 3a, b schematisch dargestellt, ein rinnenförmiges Kappensegment 10c sowie ein im Wesentlichen ebenes erstes seitliches Gehäuse-Segment 10a und ein zu diesem im Wesentlichen spiegelsymmetrisches zweites seitliches Gehäuse-Segment 10b. Die Form des Kappensegments 10c entspricht, wie aus der Zusammenschau von Fig. 3a und 3b ohne weiteres ersichtlich, im Wesentlichen der einer toroidalen Schale. Dementsprechend weist das Kappensegment 10c einen im Wesentlichen kreisbogenförmigen, bevorzugt halbkreisförmigen, Querschnitt von vorgebbarem Radius r auf und, zumindest virtuell, einen im Wesentlichen kreisbogenförmigen ersten Segmentrand 10c' mit einem im Vergleich zum Radius r wesentlich größeren Radius R sowie einem zum ersten Segmentrand im Wesentlichen identisch geformten zweiten Segmentrand 10c". Falls erforderlich, kann sowohl der Querschnitt als auch der Segmentrand nicht ideal-kreisförmig, also leicht elliptisch geformt sein. Wie aus der Zusammenschau der Fign. 3a, b und 4 ohne weiteres ersichtlich, sind die seitlichen Gehäuse-Segmente 10a, 10b jeweils über einen kreisbogenförmigen ersten Segmentrand 10a' bzw. 10b' mit dem ersten bzw. zweiten Segmentrand 10c', 10c" des Kappensegments 10c verbunden, und zwar so, dass die seitlichen Gehäuse-Segmente 10a; 10b jeweils in einer Tangentialebene des Kappensegments 10c und somit zu einer an den zugehörigen Segmentrand 10ca bzw. 10cb anlegbaren Tangente im Wesentlichen fluchtend ausgerichtet sind. Anders gesagt, zwischen dem Kappen- und dem Gehäuse-Segment 10c, 10a bzw. dem Kappen-Gehäuse-Segment 10c, 10b ist jeweils ein weitgehend stetiger, also möglichst glatter Übergang geschaffen, in dem bei zulässigem innerem Überdruck möglichst keine oder nur sehr geringe Biegespannungen erzeugt werden. Außerdem ist die Gehäusekappe 7 über einen dritten Segmentrand 10c+ und einen vierten Segmentrand 10c^{≠} des Kappensegments 10c sowie über jeweils einen zweiten Segmentrand 10a", 10b" des ersten und zweiten seitlichen Gehäuse-Segments 10a bzw. 10b am Tragelement 6 fixiert, und zwar so, dass das Kappensegment bzw. die Gehäuse-Segmente 10c, 10a, 10b im Betrieb vom wenigstens einen vibrierenden Rohrsegment 41 beabstandet bleiben. Zur Herstellung der Gehäusekappe 7 können die Segmente 10c, 10a, 10b z.B. jeweils einzeln vorgefertigt und nachträglich zusammengefügt, insb. miteinander verschweißt werden. In vorteilhafter Weise kann bei der Herstellung der Gehäusekappe 7 z.B. auch das in der bereits erwähnten WO-A 03/021202 beschriebene Verfahren zum Herstellen einer als Gehäusekappe 7 verwendbaren Metallkappe angewendet werden, bei dem diese durch Verschweißen zweier im Wesentlichen identisch geformter, insb. aus einem tellerförmigen Halbzeug ausgeschnittener, Kappenhälften mit einer, insb. vierteltorusförmigen, Randwulst gebildet wird. Ferner kann die Gehäusekappe 7 z.B. auch aus einem Metallblech von entsprechender Dicke tiefgezogen werden.

Wie bereits erwähnt erzeugt, die Messgerät-Elektronik 20 im Betrieb einerseits das die Erregeranordnung speisende Treibersignal, andererseits empfängt die Messgerät-Elektronik die Schwingungssignale der Sensoranordnung und generiert daraus gewünschte, den Massedurchfluss, die Dichte, die Viskosität oder die Temperatur des strömenden Fluids repräsentierende Messwerte. Erfindungsgemäß ist ferner vorgesehen, dass die Messgerät-Elektronik im Betrieb einen statischen Innendruck innerhalb des Messaufnehmer-Gehäuses und/oder eine Dichtheit des wenigstens einen Messrohrs überwacht. Dafür ermittelt die Messgerät-Elektronik gemäß einer vorteilhaften Ausgestaltung der Erfindung anhand wenigstens eines intern der Messgerät-Elektronik ermittelten bzw. aktualisierten Betriebsparameters wiederholt wenigstens einen Überwachungswert, der in seiner Höhe vom momentanen statischen Innendruck innerhalb des Messaufnehmer-Gehäuses und/oder von einem das wenigstens eine Messrohr momentan umgebenden Medium abhängig ist. Für den oben erwähnten Fall, dass die Messgerät-Elektronik mittels des Datenübertragungssystems mit einer übergeordneten, Messwerte verarbeitenden Steuerungseinheit kommuniziert, kann die Messgerät-Elektronik beispielsweise das Alarmsignal via Datenübertragungssystems auch an die Steuerungseinheit senden.

Gemäß einer weiteren Ausgestaltung der Erfindung ist ferner vorgesehen, dass die Messgerät-Elektronik den Überwachungswert mit einem Grenzwert vergleicht, der eine für das Messrohr im Betrieb maximal zulässige Höhe des Überwachungswerts repräsentiert und/oder dass die Messgerät-Elektronik den Überwachungswert mit einem Änderungsgrenzwert vergleicht, der eine im Betrieb, insb. über ein vorgegebenes Zeitintervall gemittelte, maximal zulässige Änderungsgeschwindigkeit des Überwachungswerts repräsentiert. Für den Fall, dass die Messgerät-Elektronik, ein Erreichen und/oder Überqueren des Grenzwerts oder des Änderungsgrenzwertes detektiert wird von Messgerät-Elektronik ein entsprechender Alarm ausgelöst. Bei dem Grenzwert bzw. Änderungsgrenzwert kann es sich sowohl um vorab, beispielsweise bei der Kalibrierung und/oder bei der Inbetriebnahme des In-Line-Messgeräts, ermittelte Datenwerte handeln; falls erforderlich kann der Grenzwert bzw. der Änderungsgrenzwert aber auch im Betrieb des In-Line-Messgeräts seitens des Anwenders, beispielsweise auch via Datenkommunikationssystem, geändert und somit zeitnah an die tatsächlichen Gegebenheiten, beispielsweise die Art oder Eigenschaften des momentan zu messenden Mediums, angepaßt werden.

Weiterführende Untersuchungen haben gezeigt, dass dabei sowohl das Treibersignal für die Erregeranordnung als auch das wenigstens eine Schwingungsmesssignal Informationen über den zu überwachenden statischen Innendruck innerhalb des Messaufnehmer-Gehäuses und insoweit auch über die zu überwachende Dichtheit des wenigstens einen Messrohrs liefern kann. Dementsprechend kann es sich bei dem während des Betriebs intern ermittelten und/oder intern gemessenen Betriebsparameter beispielsweise um den Erregerstrom, die momentan angeregete Nutz-Schwingungsfrequenz, eine momentane Dämpfung des schwingenden Messrohrs und/ oder davon abgeleitete Parameter, wie z.B. die mittels der Messgerät-Elektronik momentan gemessene Dichte, ₚ, und/oder die mittels der Messgerät-Elektronik gemessene Viskosität, _{η}, des Mediums handeln. So konnte beispielsweise festgestellt werden, dass eine im Betrieb ohne weiteres messbare Abweichung des Erregerstroms von einem im Normalbetrieb nominal erwarteten Erregerstrom eine sehr starke, nahezu proportionale Abhängigkeit von dem momentanen statischen Innendruck aufweist. Entsprechende Verläufe des Erregerstroms bzw. von dessen Abweichung vom nominalen Erregerstrom, die exemplarisch anhand zweier im Wesentlichen baugleicher Messaufnehmer unterschiedlicher Nennweite
(DN 15, DN 25) und für verschiedene Innendrücke im Messaufnehmer-Gehäuse experimentell ermittelt wurden, sind in Fig. 6 dargestellt.

Dementsprechend ist nach einer weiteren Ausgestaltung der Erfindung vorgesehen, dass die Messgerät-Elektronik den Überwachungswert unter Verwendung des wenigstens einen Treibersignals, insb. anhand des in der Erregeranordnung fließenden Erregerstroms und/oder anhand einer zeitlichen Änderung des Erregerstroms, generiert. Hierzu ermittelt die Messgerät-Elektronik nach einer weiteren vorteilhaften Ausgestaltung der Erfindung zumindest zeitweise intern einen, insb. digitalen, Erregerstromwert, der eine Stromstärke des Erregerstroms momentan repräsentiert, der dann auch dazu verwendet wird, den Überwachungswert zu generierten. Falls erforderlich, können auch eine Folge und/oder eine zeitliche Mittelung von mehren, insb. digital gespeicherten, Erregerstromwerten der Erzeugung des Überwachungswerts dienen. Alternativ oder in Ergänzung können auch eine zeitlichen Ableitung der Stromstärke des Erregerstrom und/oder eine andere, zeitliche Änderungen der Stromstärke des Erregerstrom charakterisierenden Messgrößen, beispielsweise der Kehrwert der zeitlichen Ableitung und/oder ein zeitlicher Mittelwert, zur Ermittlung des Überwachungswerts herangezogen werden. Darüberhinaus können anstelle absoluter Werte für den Erregerstrom bzw. dessen momentaner Abweichung vom nominalen Erregerstrom auch relative Werte für die Abweichungen und insoweit auch für die Ermittlung des Überwachungswerts herangezogen werden.

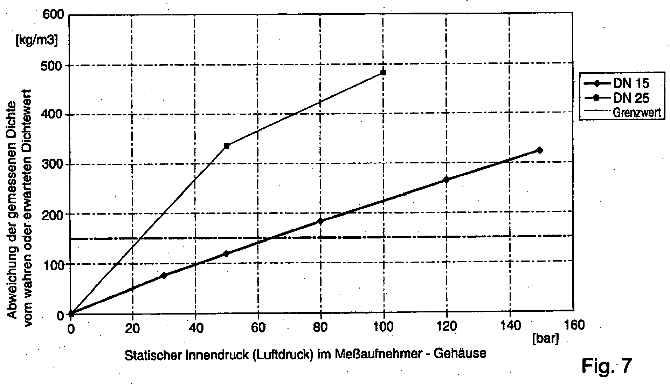

Es konnte zudem festgestellt werden, dass neben dem Erregerstrom auch die im Betrieb basierend auf dem Schwingungsmesssignal, insb. anhand der Nutz-Schwingungsfrequenz, gemessene Dichte, _{ρ}, gleichermaßen signifikant auf eine Erhöhung des statischen Innenrucks im Messaufnehmer-Gehäuse mit einer korrespondierenden Abweichung von einer nominellen Referenzdichte reagiert. Experimentell ermittelte Verläufe der gemessenen Dichte bzw. von deren Abweichung von einer vorgegebenen Referenzdichte sind in-Abhängigkeit vom innerhalb des Messaufnehmer-Gehäuses gemessenen Innendruck in Fig. 7 exemplarisch dargestellt Demgemäß ist die Messgerät-Elektronik nach einer Weiterbildung der Erfindung ferner dafür vorgesehen, die Dichte, ₚ, des Mediums zu messen und zumindest zeitweise einen die die Dichte, _{ρ}, des Mediums repräsentierenden, insb. digitalen, Dichte-Messwert X_{ρ} zu liefern. Dabei ist die Messgerät-Elektronik ferner dafür ausgelegt, den Überwachungswert unter Verwendung des intern ermittelten Dichte-Messwerts X_{ρ}, insb. anhand einer Folge von digital gespeicherten Dichte-Messwerten, zu generieren. Alternativ oder in Ergänzung können auch eine zeitlichen Ableitung der gemessenen Dichte und/oder eine andere, zeitliche Änderungen der gemessenen Dichte charakterisierenden Messgrößen der Ermittlung des Überwachungswerts dienen. Es ei an dieser Stelle noch erwähnt, dass anstelle der gemessenen Dichte auch die von der Dichte des Mediums abhängige Schwingungsfrequenz, mit der das wenigstens eine Messrohr zumindest zeitweise schwingt, zur Generierung des Uberwachungswerts herangezogen werden kann, zumal die im Betrieb angeregte Nutz-Schwingungsfrequenz zumindest zur Regelegung des Treibersignals wie auch ggf. zum Zwecke der Dichtemessung ohnehin ermittelt wird. Gleichermaßen können daher auch von der wenigstens einen Schwingungsfrequenz darüber hinaus abgeleitete Messgrößen zur Generierung des Überwachungswerts verwendet werden, beispielsweise zeitliche Änderungen oder andere, zeitliche Änderungen der wenigstens einen Schwingungsfrequenz charakterisierenden Messgrößen. Der Grenzwert kann dabei beispielsweise mit der oben erwähnten unteren Grenzfrequenz des Nutz-Frequenzbandes _{Δ}Fₙ korrespondieren, während der der Änderungsgrenzwert beispielsweise anhand einer maximal zulässigen Änderungsgeschwindigkeit für die Nutz-Schwingungsfrequenz für den Messaufnehmer vorab bestimmt werden kann. Auch bei der Verwendung der gemessenen Dichte bzw. der gemessenen Schwingungsfrequenz kann der Überwachungswert ebenfalls sowohl basierend auf absoluten als auch basierend auf relativen Werten für die momentanen Abweichungen vom zugehörigen Nominalwert werden.

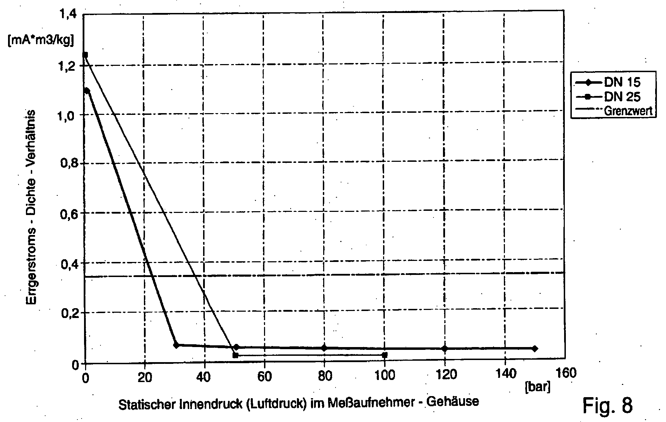

Nach einer weiteren Ausgestaltung der Erfindung ist vorgesehen, dass die Messgerät-Elektronik den Überwachungswert sowohl anhand des Erregerstroms als auch anhand des intern ermittelten Dichte-Messwerts und/oder der wenigstens einen intern gemessenen Schwingungsfrequenz des Messrohrs ermittelt. Als dafür besonders vorteilhafter Betriebsparameter hat sich beispielsweise ein Quotient erwiesen, der mittels des intern ermittelten Erregerstromwerts und des intern ermittelten Dichte-Messwerts gebildet ist, wobei sich unter Verwendung der oben erwähnten, experimentell für den Erregerstrom und die Dichte jeweils ermittelten Messdaten die in Fig. 8 gezeigten Verläufe für die jeweils auf die zugehörig gemessenen Dichte-Messwerte normierten Erregerströme ergeben. Deutlich erkennbar ist der anfänglich sehr steile Abfall des entsprechend normierten Erregerstroms, der dazu führt, dass schon bei sehr geringfügigen und eher unkritischen Druckerhöhungen im Bereich unterhalb von 100 bar ein einfaches und robustes Detektieren des im Messaufnehmer-Gehäuse herrschenden überhöhten statischen Innendrucks infolge von eindringender Leckage ermöglicht.

Aufgrund der intrinsischen Überwachung auch des statischen Innendruck innerhalb des Messaufnehmer-Gehäuses wie auch der Dichtheit des wenigstens einen Messrohrs ist das erfindungsgemäße In-Line-Messgerät besonders auch für den Einsatz in Rohrleitungssystemen geeignet, die potentiell umweltgefährdende, insb. toxische und/oder explosive, Medien führen. Darüber hinaus kann das erfindungsgemäße In-Line-Messgerät in vorteilhafter Weise auch in Rohrleitungssystemen eingesetzt werden, die betriebsgemäß unter hohem Druck von weit über 200 bar stehende Fluide führen. Von besonderem Vorteil ist das selbsttätige Überwachen des Innendrucks im Messaufnehmer-Gehäuse mittels der Messgerät-Elektronik außerdem für In-Line-Messgeräte, deren Messaufnehmer-Gehäuse, wie es beispielsweise beim oben erwähnten Tragzylinder oftmals der Fall ist, vergleichsweise dickwandig und insoweit auch vergleichsweise druckfest ausgebildet ist, da dann einerseits eine Druckerhöhung im Inneren von außen kaum sichtbar wird und andererseits ein allfälliges Bersten des Messaufnehmer-Gehäuse aufgrund der dann sehr hohen gespeicherten mechanischen Energie katastrophale Zerstörungen innerhalb der betroffenen Anlage verursachen würde.

## Patentansprüche

1. In-Line-Messgerät zumMessen eines in einer Rohrleitung strömenden, insb. gasförmigen und/oder flüssigen, Mediums, welches In-Line-Messgerät einen Messaufnehmer vom Vibrationstyp sowie eine mit dem Messaufnehmer elektrisch gekoppelte Messgerät-Elelctrontk (20) umfasst,
- wobei der Messaufnehmer
-- wenigstens ein mit der Rohrleitung kommunizierendes, im Betrieb vibrierendes Messrohr (4, 5),
-- eine auf das wenigstens eine Messrohr einwirkende elektromechanische, insb. elektro-dynamische, Erregeranordnung (60) zum Erzeugen und Aufrechterhalten von mechanischen Schwingungen des Messrohrs,
-- eine Sensoranordnung (70) zum Erzeugen wenigstens eines Schwingungen des Messrohrs repräsentierenden Schwingungsmesssignals (s_{vb}) mit wenigstens einem am Messrohr oder in dessen Nähe angeordnete Schwingungssensor, sowie
-- ein das wenigstens eine Messrohrs zusammen mit der Erreger und der Sensoranordnung einhausendes Messaufnehmer-Gehäuse (10) aufweist, und
- wobei die Messgerät-Elektronik einen statischen Innendruck Innerhalb des Messaufnehmer-Gehäuses überwacht.

2. In-Line-Meßgerät gemäß dem vorherigen Anspruch, wobei die Meßgerät-Elektronik anhand wenigstens eines während des Betriebs intern ermittelten und/oder intern gemessenen Betriebsparameters wiederholt wenigstens einen Überwachungswert ermittelt, der in seiner Höhe vom momentanen statischen Innendruck innerhalb des Meßaufnehmer-Gehäuses (10) und/oder von einem das wenigstens eine Meßrohr momentan umgebenden Medium abhängig ist.

3. In-Line-Meßgerät gemäß dem vorherigen Anspruch, wobei die Meßgerät-Elektronik den Überwachungswert unter Verwendung des wenigstens einen Schwingungsmeßsignals (s_{vb}) generiert.

4. In-Line-Meßgerät gemäß Anspruch 2 oder 3, wobei die Meßgerät-Elektronik wenigstens ein Treibersignal (s_{xc}) für die Erregeranordnung erzeugt, und wobei die Meßgerät-Elektronik den Überwachungswert unter Verwendung des wenigstens einen Treibersignals, insb. anhand des in der Erregeranordnung fließenden Erregerstroms, generiert.

5. In-Line-Meßgerät gemäß einem der Ansprüche 2 bis 4, wobei die Erregeranordnung zumindest zeitweise von einem von der Meßgerät-Elektronik getriebenen Erregerstrom durchflossen ist, und wobei die Meßgerät-Elektronik den Überwachungswert anhand des Erregerstroms und/oder anhand einer zeitlichen Änderung des Erregerstroms generiert.

6. In-Line-Meßgerät gemäß dem vorherigen Anspruch, wobei die Meßgerät-Elektronik einen, insb. digitalen, Erregerstromwert ermittelt, der eine Stromstärke des Erregerstroms momentan repräsentiert, und wobei die Meßgerät-Elektronik den Überwachungswert unter Verwendung wenigstens eines intern ermittelten Erregerstromwerts, insb. anhand einer Folge von Erregerstromwerten, generiert.

7. In-Line-Meßgerät gemäß dem vorherigen Anspruch, wobei die Meßgerät-Elektronik den Überwachungswert anhand einer Folge von, insb. digital gespeicherten, Erregerstromwerten generiert.

8. In-Line-Meßgerät gemäß dem vorherigen Anspruch, wobei die Meßgerät-Elektronik den Überwachungswert anhand einer zeitlichen Ableitung der Stromstärke des Erregerstrom und/oder einer anderen zeitliche Änderungen der Stromstärke des Erregerstroms charakterisierenden Meßgröße generiert.

9. In-Line-Meßgerät gemäß dem vorherigen Anspruch, das weiters dafür vorgesehen ist, die Dichte des Mediums zu messen, wobei die Meßgerät-Elektronik unter Verwendung des wenigstens einen Schwingungsmeßsignals wiederholt einen, insb. digitalen, Dichte-Meßwert ermittelt, der eine Dichte des Mediums momentan repräsentiert, und wobei die Meßgerät-Elektronik den Überwachungswert unter Verwendung wenigstens eines intern ermittelten Dichte-Meßwerts, insb. anhand einer Folge von Dichte-Meßwerten, generiert.

10. In-Line-Meßgerät gemäß dem vorherigen Anspruch, wobei die Meßgerät-Elektronik den Überwachungswert anhand einer Folge von, insb. digital gespeicherten, Dichte-Meßwerten, generiert.

11. In-Line-Meßgerät gemäß dem vorherigen Anspruch, wobei die Meßgerät-Elektronik den Überwachungswert anhand einer zeitlichen Ableitung der gemessenen Dichte und/oder einer anderen zeitliche Änderungen der gemessenen Dichte charakterisierenden Meßgröße generiert.

12. In-Line-Meßgerät gemäß einem der Ansprüche 5 bis 8 und einem der Ansprüche 9 bis 11, wobei die Meßgerät-Elektronik den Überwachungswert anhand eines Quotienten generiert, der mittels eines intern ermittelten Erregerstromwerts und eines intern ermittelten Dichte-Meßwerts gebildet ist.

13. In-Line-Meßgerät gemäß einem der Ansprüche 2 bis 12, wobei die Meßgerät-Elektronik den Überwachungswert anhand wenigstens einer der Überwachung dienenden Schwingungsfrequenz, mit der das wenigstens eine Meßrohr zumindest zeitweise schwingt, und/oder anhand einer zeitlichen Änderung dieser wenigstens einen Schwingungsfrequenz generiert.

14. In-Line-Meßgerät gemäß dem vorherigen Anspruch, wobei die Meßgerät-Elektronik den Überwachungswert anhand einer zeitlichen Ableitung und/oder einer anderen zeitliche Änderungen der wenigstens einen der Überwachung dienenden Schwingungsfrequenz charakterisierenden Meßgröße generiert.

15. In-Line-Meßgerät gemäß einem der Ansprüche 9 bis 12 und einem der Ansprüche 13 bis 14, wobei die Meßgerät-Elektronik den Dichte-Meßwert anhand der wenigstens einen der Überwachung dienenden Schwingungsfrequenz ermittelt.

16. In-Line-Meßgerät gemäß einem der Ansprüche 2 bis 15, wobei die Meßgerät-Elektronik den Überwachungswert mit einem vorgegebenen und/oder im Betrieb vorgebbaren Grenzwert vergleicht, der eine für das Meßrohr im Betrieb maximal zulässige Höhe des Überwachungswerts repräsentiert, und wobei die Meßgerät-Elektronik bei detektiertem Erreichen und/oder Überqueren des Grenzwerts einen Alarm auslöst.

17. In-Line-Meßgerät gemäß einem der Ansprüche 2 bis 16, wobei die Meßgerät-Elektronik die zeitliche Änderung des Überwachungswerts mit einem vorgegebenen und/oder im Betrieb vorgebbaren Änderungsgrenzwert vergleicht, der eine im Betrieb, insb. über ein vorgegebenes Zeitintervall gemittelte, maximal zulässige Änderungsgeschwindigkeit des Überwachungswerts repräsentiert, und wobei die Meßgerät-Elektronik bei detektiertem Erreichen und/oder Überqueren des Änderungsgrenzwert einen Alarm auslöst.

18. In-Line-Meßgerät gemäß einem der Ansprüche 2 bis 17, wobei die Meßgerät-Elektronik mittels des Überwachungswerts Intern wenigstens ein Alarmsignal generiert, das einen überhöhten statischen Innendruck innerhalb des Meßaufnehmer-Gehäuses und/oder das Vorhandensein eines Lecks im wenigstens einen Meßrohr signalisiert.

19. In-Line-Meßgerät gemäß dem vorherigen Anspruch, wobei die Meßgerät-Elektronik mittels eines Datenübertragungssystems, insb. einem leitungsgebundenen Feldbussystem, mit einer übergeordneten, Meßwerte verarbeitenden Steuerungseinheit kommuniziert, und wobei die Meßgerät-Elektronik das Alarmsignal an die Steuerungseinheit sendet.

20. Verfahren zum Überwachen eines In-Line-Messgeräts zum Messen eines in einer Rohrleitung strömenden, insb. gasförmigen und/oder flüssige, Mediums, welches In-Line-Messgerät eine Messgerät-Elektronik (20) sowie einen mit dieser elektrisch gekoppelten Messaufnehmers vom Vibrationstyp umfasst, der wenigstens ein mit der Rohrleitung kommunizierendes und im Betrieb vibrierendes Messrohr (4, 5), eine auf das wenigstens eine Messrohr einwirkende elektromechanische, insb. elektro-dynamische. Erregeranordnung (60) zum Erzeugen und Aufrechterhalten von mechanischen Schwingungen des Messrohrs, eine Sensoranordnung (70) zum Erzeugen wenigstens eines Schwingungen des Messrohrs repräsentierenden Schwingungsmesssignals (s_{vb}) mit wenigstens einem am Messrohr oder in dessen Nähe angeordnete Schwingungssensor, sowie ein das weinigstens eine Messrohr zusammen mit der Erreger- und der Sensoranordnung einhausendes Messaufnehmer-Gehäuse (10) aufweist, welches Verfahren folgende Schritte umfasst:
- Strömenlassen des zu messenden Mediums durch das wenigstens eine Messrohr des Messaufnehmers,
- Fliessenlassen eines von der Messgeräte-Elektronik gelieferten Erregerstroms durch die Erregeranordnung und Vibrierenlassen des wenigstens einen Messrohrs zum Erzeugern von mit wenigstens einer vom Medium zu erfassenden Messgrösse korrespondierenden Reaktionskräften im Medium,
- Erfassen von Vibrationen des wenigstens einen Messrohrs mittels der Sensoranordnung und Erzeuen wenigstens eines mechanische Schwingungen des Messrohrs repräsentierenden Schwingungsmesssignals (s_{vb}), sowie
- Ermitteln eines statischen Innendrucks innerhalb des Messaufnehmer-Gehäuses.

21. Verfahren gemäß dem vorherigen Anspruch, weiters umfassend den Schritt des Generieren wenigstens eines Überwachungswerts, der in seiner Höhe vom momentanen statischen Innendruck innerhalb des Meßaufnehmer-Gehäuses und/oder von einem das weinigstens eine Meßrohr momentan umgebenden Medium abhängig ist, mittels der Meßgerät-Elektronik.

22. Verfahren gemäß dem vorherigen Anspruch, weiters umfassend den Schritt des Vergleichens des wenigstens einen Überwachungswerts mit einem Grenzwert, der eine für das Meßrohr im Betrieb maximal zulässige Höhe des Überwachungswerts repräsentiert, und/oder mit einem Änderungsgrenzwert, der eine im Betrieb, insb. über ein vorgegebenes Zeitintervall gemittelte, maximale zulässige Änderungsgeschwindigkeit des Überwachungswerts repräsentiert.

23. Verfahren gemäß dem vorherigen Anspruch, weiters umfassend Schritte des Detektiertens eines Erreichen und/oder Überqueren des Grenzwerts und/oder des Änderungsgrenzwert sowie Auslösen eines Alarms.

24. Verfahren gemäss einem der Ansprüche 21 bis 23, wobei die Messgerät Elektronik den wenigstens einen Überwachungswert anhand wenigstens eines während des Betriebs intern ermittelten und/oder intern gemessenen Betriebsparameters, insb. eines Erregerstromwerts, der eine Stromstärke des Erregerstroms momentan repräsentiert, einer der Überwachung dienenden Schwingungsfrequenz oder davon abgeleiteter Betriebsparameter, ermittelt.

25. Verfahren gemäss einem der Ansprüche 20 bis 24, weiters umfassend einen Schritt des Überwachens einer Dichtheit des wenigstens einen Meßrohrs.

26. In-Line-Messgerät gemäß einem der Ansprüche 1 bis 19, wobei die Messgerät-Elektronik auch eine Dichtheit des wenigstens einen Messrohrs überwacht.

## Claims

1. In-line measuring device for measuring a medium, particularly a gaseous and/or liquid medium, flowing in a pipe, said in-line measuring device comprising a vibronic-type sensor and measuring device electronics (20) electrically coupled with the sensor,
- wherein the sensor has
-- at least one measuring tube (4, 5) which communicates with the pipe and vibrates during operation
-- an electromechanical, particularly an electrodynamic, exciter arrangement (60) which acts on the at least one measuring tube and is designed to generate and maintain mechanical vibrations of the measuring tube,
-- a sensor arrangement (70) for generating at least one vibration measuring signal (S_{VB}) representing vibrations of the measuring tube with at least one vibration sensor arranged on the measuring tube or in the vicinity of the measuring tube, and
-- a sensor housing (10) accommodating the at least one measuring tube together with the exciter and the sensor arrangement, and
- wherein the measuring device electronics monitor a static internal pressure within the sensor housing.

2. In-line measuring device as claimed in the previous claim, wherein the measuring device electronics repeatedly determine at least one monitoring value using at least one operating parameter determined internally and/or measured internally during operation, the level of said monitoring value being dependent on the current static internal pressure within the sensor housing (10) and/or on a medium currently surrounding the at least one measuring tube.

3. In-line measuring device as claimed in the previous claim, wherein the measuring device electronics generate the monitoring value using the at least one vibration measuring signal (S_{VB}).

4. In-line measuring device as claimed in the Claim 2 or 3, wherein the measuring device electronics generate at least one drive signal (S_{xc}) for the exciter arrangement, and wherein the measuring device electronics generate the monitoring value using the at least one drive signal, particularly using the exciter current flowing through the exciter arrangement.

5. In-line measuring device as claimed in one of the Claim 2 to 4, wherein an exciter current, which is driven by the measuring device electronics, at least temporarily flows through the exciter arrangement, and wherein the measuring device electronics generate the monitoring value using the exciter current and/or using a change in the exciter current over time.

6. In-line measuring device as claimed in the previous claim, wherein the measuring device electronics determine an exciter current value, particularly a digital value, representing a current intensity of the exciter current, and wherein the measuring device electronics generate the monitoring value using at least one exciter current value determined internally, particularly using a series of exciter current values.

7. In-line measuring device as claimed in the previous claim, wherein the measuring device electronics generate the monitoring value using a series of exciter current values, particularly values saved digitally.

8. In-line measuring device as claimed in the previous claim, wherein the measuring device electronics generate the monitoring value using a time derivative of the current strength of the exciter current and/or another measured variable characterizing changes over time in the current strength of the exciter current.

9. In-line measuring device as claimed in the previous claim which is further designed to measure the density of the medium, wherein the measuring device electronics repeatedly determine a, particularly digital, density measured value using the at least one vibration measuring signal, said density measured value currently representing a density of the medium, and wherein the measuring device electronics generate the monitoring value using at least one density measured value determined internally, particularly using a series of density measured values.

10. In-line measuring device as claimed in the previous claim, wherein the measuring device electronics generate the monitoring value using a series of density measured values, particularly measured values saved digitally.

11. In-line measuring device as claimed in the previous claim, wherein the measuring device electronics generate the monitoring value using a time derivative of the measured density and/or another measured variable characterizing changes over time in the measured density.

12. In-line measuring device as claimed in one of the Claims 5 to 8, and one of the Claims 9 to 11, wherein the measuring device electronics generate the monitoring value using a quotient which is formed using an exciter current value determined internally and a density measured value determined internally.

13. In-line measuring device as claimed in one of the Claims 2 to 12, wherein the measuring device electronics generate the monitoring value using at least one vibration frequency, which is used for monitoring and at which the at least one measuring tube vibrates at least temporarily, and/or using a change over time of this one vibration frequency at least.

14. In-line measuring device as claimed in the previous claim, wherein the measuring device electronics generate the monitoring value using a derivation over time and/or another measured variable characterizing changes over time in the at least one vibration frequency used for monitoring.

15. In-line measuring device as claimed in one of the Claims 9 to 12, and one of the Claims 13 to 14, wherein the measuring device electronics determine the density measured value using the at least one vibration frequency which is used for monitoring.

16. In-line measuring device as claimed in one of the Claims 2 to 15, wherein the measuring device electronics compare the monitoring value with a predefined limit value and/or a limit value which can be specified during operation, said limit value representing a maximum level of the monitoring value which is permitted for the measuring tube during operation, and wherein the measuring device electronics trigger an alarm if it is detected that the limit value is reached and/or exceeded.

17. In-line measuring device as claimed in one of the Claims 2 to 15, wherein the measuring device electronics compare the change over time in the monitoring value with a predefined change-related limit value and/or a changerelated limit value which can be specified during operation, said limit value representing a maximum permitted change in the speed of the monitoring value during operation, particularly a change averaged over a pre-specified time interval, and wherein the measuring device electronics trigger an alarm if it is detected that the change-related limit value is reached and/or exceeded.

18. In-line measuring device as claimed in one of the Claims 2 to 17, wherein the measuring device electronics generate at least one alarm signal internally using the monitoring value, said signal signaling an excessively high static internal pressure in the sensor housing and/or the presence of a leak in the at least one measuring tube.

19. In-line measuring device as claimed in the previous claim, wherein the measuring device electronics communicate with a higher-order control unit, which processes measured values, by means of a data transmission system, particularly a wired field bus system, and wherein the measuring device electronics send the alarm signal to the control unit.

20. Procedure to monitor an in-line measuring device for measuring a medium flowing through a pipe, particularly a gaseous and/or liquid medium, said in-line measuring device comprising measuring device electronics (20) and a vibronic-type sensor electrically coupled to the measuring device electronics (20), which has at least one measuring tube (4, 5) which communicates with the pipe and vibrates during operation, an electromechanical, particularly electrodynamic, exciter arrangement (60), which acts on the at least one measuring tube, to generate and maintain mechanical vibrations of the measuring tube, a sensor arrangement (70) to generate at least one vibration measuring signal (S_{VB}) that represents vibrations of the measuring tube with at least one vibration sensor arranged on or near the measuring tube, as well as a sensor housing (10) accommodating the at least one measuring tube together with the exciter and sensor arrangement, said procedure comprising the following steps:
- Allowing the medium under measurement to flow through the at least one measuring tube of the sensor,
- Allowing an exciter current, which is supplied by the measuring device electronics, to flow through the exciter arrangement and allowing the at least one measuring tube to vibrate to generate reaction forces in the medium corresponding to at least one measured variable to be measured,
- Recording of vibrations of the at least one measuring tube with the sensor arrangement and generating at least one vibration measuring signal (S_{VB}) that represents vibrations of the measuring tube, and
- Determining a static internal pressure within the sensor housing.

21. Procedure as claimed in the previous claim, further comprising the step of generating with the measuring device electronics at least one monitoring value the level of which depends on the current static internal pressure within the sensor housing and/or on a medium currently surrounding the one measuring tube at least.

22. Procedure as claimed in the previous claim, further comprising the step of comparing the at least one monitoring value with a limit value representing a maximum level of the monitoring value which is permitted for the measuring tube during operation, and/or with a change-related limit value which represents a maximum permitted change in the speed of the monitoring value during operation, particularly a change averaged over a pre-specified time interval.

23. Procedure as claimed in the previous claim, further comprising steps to detect the limit value and/or the change-related limit value being reached and/or exceeded and to trigger an alarm.

24. Procedure as claimed in one of the Claims 21 to 23, wherein the measuring device electronics determine the at least one monitoring value using at least one operating parameter determined internally and/or measured internally during operation, particularly an exciter current value which currently represents a current intensity of the exciter current, a vibration frequency used for monitoring purposes or operating parameters derived therefrom.

25. Procedure as claimed in one of the Claims 20 to 24, further comprising a step to monitor leak-tightness of the at least one measuring tube.

26. In-line measuring device as claimed in one of the Claims 1 to 19, wherein the measuring device electronics also monitor leak-tightness of the at least one measuring tube.

## Revendications

1. Appareil de mesure en ligne destiné à la mesure d'un produit s'écoulant dans une conduite, notamment gazeux et/ou liquide, lequel appareil de mesure en ligne comprend un transmetteur de mesure du type à vibrations, ainsi qu'une électronique d'appareil de terrain (20) couplée électriquement avec le transmetteur de mesure,
- pour lequel le transmetteur de mesure comporte :
-- au moins un tube de mesure (4, 5) vibrant en fonctionnement, communiquant avec la conduite,
-- un circuit excitateur (60) électromécanique, notamment électrodynamique, agissant sur l'au moins un tube de mesure, lequel circuit est destiné à générer et à maintenir les vibrations mécaniques du tube de mesure,
-- un circuit capteur (70) destiné à la génération d'au moins un signal de mesure de vibration (S_{vb}) représentant les vibrations du tube de mesure avec au moins un capteur de vibrations disposé sur le tube de mesure ou à proximité de ce dernier, ainsi que
-- un boîtier de transmetteur de mesure (10) renfermant l'au moins un tube de mesure conjointement avec le circuit excitateur et le circuit capteur, et
- pour lequel l'électronique d'appareil de mesure surveille une pression statique interne au sein du boîtier de transmetteur de mesure.

2. Appareil de mesure en ligne selon la revendication précédente, pour lequel l'électronique d'appareil de mesure détermine de façon répétée au moins une valeur de surveillance sur la base d'au moins un paramètre de fonctionnement déterminé de façon interne pendant le fonctionnement et/ou mesuré de façon interne, laquelle valeur dépend de la pression interne statique momentanée régnant à l'intérieur du boîtier de transmetteur de mesure (10) et/ou d'un produit entourant momentanément l'au moins un tube de mesure.

3. Appareil de mesure en ligne selon la revendication précédente, pour lequel l'électronique d'appareil de mesure génère la valeur de surveillance en utilisant l'au moins un signal de mesure de vibration (S_{vb}).

4. Appareil de mesure en ligne selon la revendication 2 ou 3, pour lequel l'électronique d'appareil de mesure génère au moins un signal d'attaque (S_{xc}) pour le circuit excitateur, et pour lequel l'électronique d'appareil de mesure génère la valeur de surveillance en utilisant l'au moins un signal d'attaque, notamment sur la base du courant d'excitation circulant dans le circuit excitateur.

5. Appareil de mesure en ligne selon la revendication 2 à 4, pour lequel le circuit excitateur est parcouru au moins temporairement par un courant d'excitation généré par l'électronique d'appareil de mesure, et pour lequel l'électronique d'appareil de mesure génère la valeur de surveillance sur la base du courant d'excitation et/ou sur la base d'une variation temporelle du courant d'excitation.

6. Appareil de mesure en ligne selon la revendication précédente, pour lequel l'électronique d'appareil de mesure détermine une valeur de courant d'excitation, notamment numérique, qui représente momentanément une intensité du courant d'excitation, et pour lequel l'électronique d'appareil de mesure génère la valeur de surveillance en utilisant au moins une valeur de courant d'excitation déterminée en interne, notamment sur la base d'une série de valeurs de courant d'excitation.

7. Appareil de mesure en ligne selon la revendication précédente, pour lequel l'électronique d'appareil de mesure génère la valeur de surveillance sur la base d'une série de valeurs de courant d'excitation, notamment enregistrées sous forme numérique.

8. Appareil de mesure en ligne selon la revendication précédente, pour lequel l'électronique d'appareil de mesure génère la valeur de surveillance sur la base d'une dérivée temporelle de l'intensité du courant d'excitation et/ou sur la base d'une autre grandeur de mesure caractérisant des variations temporelles de l'intensité du courant d'excitation.

9. Appareil de mesure en ligne selon la revendication précédente, prévu en outre pour mesurer la densité du produit, l'électronique d'appareil de mesure déterminant de façon répétée une valeur de mesure de densité, notamment numérique, en utilisant l'au moins un signal de mesure de vibration, laquelle valeur représente momentanément une densité du produit, et l'électronique d'appareil de mesure générant la valeur de surveillance en utilisant au moins une valeur de mesure de densité déterminée en interne, notamment sur la base d'une série de valeurs de mesure de densité.

10. Appareil de mesure en ligne selon la revendication précédente, pour lequel l'électronique d'appareil de mesure génère la valeur de surveillance sur la base d'une série de valeurs de mesure de densité, notamment enregistrées sous forme numérique.

11. Appareil de mesure en ligne selon la revendication précédente, pour lequel l'électronique d'appareil de mesure génère la valeur de surveillance sur la base d'une dérivée temporelle de la densité mesurée et/ou d'une autre grandeur de mesure caractérisant des variations temporelles de la densité mesurée.

12. Appareil de mesure en ligne selon l'une des revendications 5 à 8 et l'une des revendications 9 à 11, pour lequel l'électronique d'appareil de mesure génère la valeur de surveillance sur la base d'un quotient, qui est formé au moyen d'une valeur de courant d'excitation déterminée en interne et d'une valeur de mesure de densité déterminée en interne.

13. Appareil de mesure en ligne selon l'une des revendications 2 à 12, pour lequel l'électronique d'appareil de mesure génère la valeur de surveillance sur la base d'au moins une fréquence de vibration servant à la surveillance, fréquence à laquelle l'au moins un tube de mesure vibre au moins temporairement, et/ou sur la base d'une variation temporelle de cette au moins une fréquence de vibration.

14. Appareil de mesure en ligne selon la revendication précédente, pour lequel l'électronique d'appareil de mesure génère la valeur de surveillance sur la base d'une dérivée temporelle et/ou d'une autre grandeur de mesure caractérisant des variations temporelles de l'au moins une fréquence de vibration servant à la surveillance.

15. Appareil de mesure en ligne selon l'une des revendications 9 à 12 et l'une des revendications 13 à 14, pour lequel l'électronique d'appareil de mesure détermine la valeur de mesure de densité sur la base de l'au moins une fréquence de vibration servant à la surveillance.

16. Appareil de mesure en ligne selon l'une des revendications 2 à 15, pour lequel l'électronique d'appareil de mesure compare la valeur de surveillance avec une valeur seuil prédéfinie et/ou prédéfinissable en fonctionnement, laquelle valeur seuil représente un montant maximal admissible de la valeur de surveillance, en fonctionnement pour le tube de mesure, et l'électronique d'appareil de mesure déclenchant une alarme en cas d'atteinte détectée et/ou de dépassement de la valeur seuil.

17. Appareil de mesure en ligne selon l'une des revendications 2 à 16, pour lequel l'électronique d'appareil de mesure compare la variation temporelle de la valeur de surveillance avec une valeur seuil de changement prédéfinie et/ou prédéfinissable en fonctionnement, laquelle valeur seuil de changement représente, en fonctionnement, une vitesse de changement maximale admissible de la valeur de surveillance, laquelle vitesse est notamment moyennée sur un intervalle de temps prédéfini, et l'électronique d'appareil de mesure déclenchant une alarme en cas d'atteinte détectée et/ou de dépassement de la valeur seuil de changement.

18. Appareil de mesure en ligne selon l'une des revendications 2 à 17, pour lequel l'électronique d'appareil de mesure génère en interne et au moyen de la valeur de surveillance, au moins un signal d'alarme qui signale une pression interne statique excessive au sein du boîtier de transmetteur de mesure et/ou la présence d'une fuite dans l'au moins un tube de mesure.

19. Appareil de mesure en ligne selon la revendication précédente, pour lequel l'électronique d'appareil de mesure communique avec une unité de commande maître traitant les valeurs mesurées au moyen d'un système de transmission de données, notamment un système de bus de terrain filaire, et l'électronique d'appareil de mesure émettant le signal d'alarme à l'unité de commande.

20. Procédé destiné à la surveillance d'un appareil de mesure en ligne destiné à la mesure d'un produit s'écoulant dans une conduite, notamment gazeux et/ou liquide, lequel appareil de mesure en ligne comprend une électronique d'appareil de terrain (20) ainsi qu'un transmetteur de mesure du type à vibrations couplé électriquement avec cette dernière, lequel transmetteur comporte au moins un tube de mesure (4, 5) communiquant avec la conduite et vibrant en fonctionnement, un circuit excitateur (60) électromécanique, notamment électrodynamique, agissant sur l'au moins un tube de mesure et destiné à la génération et au maintien de vibrations mécaniques du tube de mesure, un circuit capteur (70) destiné à la génération d'au moins un signal de mesure de vibration (s_{vb}) représentant les vibrations du tube de mesure avec au moins un capteur de vibrations disposé sur le tube de mesure ou à proximité de ce dernier, ainsi qu'un boîtier de transmetteur de mesure (10) renfermant l'au moins un tube de mesure conjointement avec le circuit excitateur et le circuit capteur, lequel procédé comprend les étapes suivantes :
- Entrée en écoulement du produit à mesurer à travers l'au moins un tube de mesure du transmetteur de mesure,
- Entrée en circulation d'un courant d'excitation délivré par l'électronique d'appareil de mesure à travers le circuit excitateur et entrée en vibration de l'au moins un tube de mesure par des forces de réaction dans le produit, correspondant à au moins une grandeur de mesure du produit à mesurer,
- Détection de vibrations de l'au moins un tube de mesure au moyen du circuit capteur et génération d'au moins un signal de mesure de vibration (s_{vb}) représentant les vibrations mécaniques du tube de mesure, ainsi que
- Détermination d'une pression interne statique au sein du boîtier de transmetteur de mesure.

21. Procédé selon la revendication précédente, comprenant en outre l'étape de génération d'au moins une valeur de surveillance, dont le montant dépend de la pression interne statique régnant momentanée à l'intérieur du boîtier de transmetteur de mesure et/ou d'un produit entourant momentanément l'au moins un tube de mesure.

22. Procédé selon la revendication précédente, comprenant en outre l'étape de comparaison de l'au moins une valeur de surveillance avec une valeur seuil, qui représente; en fonctionnement pour le tube de mesure, un montant maximal admissible de la valeur de surveillance, et/ou avec une valeur seuil de changement, qui représente, en fonctionnement, une vitesse de changement maximale admissible de la valeur de surveillance, laquelle vitesse est notamment moyennée sur un intervalle de temps prédéfini.

23. Procédé selon la revendication précédente, comprenant en outre l'étape de détection d'une atteinte et/ou d'un dépassement de la valeur seuil et/ou de la valeur seuil de changement, ainsi que l'étape de déclenchement d'une alarme.

24. Procédé selon l'une des revendications 21 à 23, pour lequel l'électronique d'appareil de mesure détermine l'au moins une valeur de surveillance au moyen d'au moins un paramètre de fonctionnement déterminé de façon interne pendant le fonctionnement et/ou mesuré de façon interne, notamment une valeur de courant d'excitation, qui représente momentanément une intensité du courant d'excitation, une fréquence de vibration servant à la surveillance ou un paramètre de fonctionnement qui en est dérivé.

25. Procédé selon l'une des revendications 20 à 24, comprenant en outre une étape de surveillance d'une étanchéité de l'au moins un tube de mesure.

26. Procédé selon l'une des revendications 1 à 19, pour lequel l'électronique d'appareil de mesure surveille également une étanchéité de l'au moins un tube de mesure.
